(19) Europäisches Patentamt
European Patent Office
Office européen des brevets

(11) **EP 4 668 860 A1**

(12) **EUROPEAN PATENT APPLICATION**
published in accordance with Art. 153(4) EPC

(43) Date of publication:
**24.12.2025 Bulletin 2025/52**

(21) Application number: **24806282.0**

(22) Date of filing: **18.04.2024**

(51) International Patent Classification (IPC):
***H04W 36/00*** *(2009.01)*

(52) Cooperative Patent Classification (CPC):
**H04W 36/00; H04W 74/0833**

(86) International application number:
**PCT/CN2024/088601**

(87) International publication number:
**WO 2024/234925 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.05.2023 CN 202310557886**

(71) Applicant: **Honor Device Co., Ltd.
Shenzhen, Guangdong 518040 (CN)**

(72) Inventor: **LI, Haibo
Shenzhen, Guangdong 518040 (CN)**

(74) Representative: **Goddar, Heinz J.
Boehmert & Boehmert
Anwaltspartnerschaft mbB
Pettenkoferstrasse 22
80336 München (DE)**

(54) **MEASUREMENT REPORTING METHOD AND ELECTRONIC DEVICE**

(57)     This application provides a measurement reporting method and an electronic device. In this method, the electronic device obtains communication quality parameters of at least one neighboring cell. When detecting that a second parameter of a first cell is less than a first threshold, the electronic device lowers a first parameter of the first cell, and reports an adjusted first parameter of the first cell and an unadjusted first parameter of a second cell to a source base station, so that the first parameter for measurement reporting is suppressed on an electronic device side, thereby reducing a probability that the electronic device is handed over to a cell whose service quality is poor due to impact of the second parameter.

FIG. 6

**Description**

This application claims priority to Chinese Patent Application No. 202310557886.9, filed with the China National Intellectual Property Administration on May 17, 2023 and entitled "MEASUREMENT REPORTING METHOD AND ELECTRONIC DEVICE", which is incorporated herein by reference in its entirety.

**TECHNICAL FIELD**

This application relates to the communication field, and in particular, to a measurement reporting method and an electronic device.

**BACKGROUND**

Currently, cell handover is usually as follows: A source base station or another network element on a network side performs measurement configuration for a terminal. After the configuration is completed, first, the terminal performs measurement based on the measurement configuration, and reports a measurement report to the source base station. Then, the source base station makes a handover decision based on the measurement report, and sends a handover request to a target base station (that is, a base station to be handed over to). After receiving a handover request response sent by the target base station, the source base station sends a handover command to the terminal, so as to instruct the terminal to hand over to the target base station. The terminal may be handed over to the target base station based on the instruction of the source base station. In the terminal handover process, the handover decision of the source base station is generally based on some specified parameters, for example, a reference signal received power (Reference Signal Receiving Power, RSRP) as a reference. However, because a determining condition is undiversified, the following case may be caused: A cell to which the terminal is handed over has a high RSRP, but poor service quality, thereby affecting user experience.

**SUMMARY**

This application provides a measurement reporting method and an electronic device, so as to suppress measurement reporting of a cell with poor service quality.

According to a first aspect, this application provides a measurement reporting method. The method is applied to an electronic device, and the electronic device accesses a serving cell of a source base station. The method includes: The electronic device obtains communication quality parameters of at least one neighboring cell, where the communication quality parameters include a first parameter and a second parameter. The electronic device detects that a second parameter of a first cell is less than a first threshold, and adjusts a first parameter of the first cell. The adjusted first parameter is less than the unadjusted first parameter, and the first cell belongs to the at least one neighboring cell. The electronic device sends a first measurement report of the first cell and a second measurement report of a second cell to the source base station, where the first measurement report of the first cell includes the adjusted first parameter, the second measurement report of the second cell includes a first parameter of the second cell, a second parameter of the second cell is greater than the first threshold, and the second cell belongs to the at least one neighboring cell. In this way, an electronic device side may actively adjust a specified parameter, so as to adjust a value of the specified parameter to be reported to the base station, thereby implementing proactive intervention on measurement reporting at the electronic device, and reducing a probability that the electronic device is handed over to a cell with poor service quality.

For example, the neighboring cell may be a cell of the source base station, or may be a cell of another base station.

For example, the electronic device may measure the at least one neighboring cell based on a configuration message delivered by the source base station, to obtain the communication quality parameters of the at least one neighboring cell.

For example, because the second parameter of the second cell is greater than the first threshold, the first parameter of the second cell does not need to be adjusted. In other words, no proactive intervention is required for a cell with good service quality.

For example, the first threshold is used to indicate service quality of the cell based on the second parameter. To be specific, if the second parameter is less than the first threshold, the service quality of the cell is poor; or if the second parameter is greater than or equal to the first threshold, the service quality of the cell is high.

In a possible implementation, the method further includes: The electronic device receives handover indication information sent by the source base station, where the handover indication information includes identification information of the second cell, the handover indication information is used to indicate the electronic device to be handed over from the serving cell to the second cell, and the handover indication information is sent after the source base station determines, based on the first measurement report and the second measurement report, to hand over the electronic device to the second cell. In this way, the base station determines, based on the adjusted first parameter, a cell to which the electronic device needs to be handed over, thereby reducing a probability that a cell whose cell service quality is low due to a low second parameter is selected, and improving service usage experience after the electronic device is handed over.

In a possible implementation, the adjusting a first parameter of the first cell includes: The electronic device adjusts the first parameter of the first cell based on the following formula:

adjusted first parameter = second threshold - (first threshold - second parameter) * preset coefficient.

In this way, the electronic device may first adjust the first parameter to the second threshold, and then adjust the second threshold based on the preset coefficient and the like, to obtain the adjusted first parameter.

For example, the second threshold is generally less than an actual value of the unadjusted first parameter.

In a possible implementation, the sending a first measurement report of the first cell and a second measurement report of a second cell to the source base station includes: The electronic device determines, based on a first parameter of each of the at least one neighboring cell, whether a measurement reporting condition is met. The electronic device detects that the adjusted first parameter of the first cell and the first parameter of the second cell meet the measurement reporting condition, and sends the first measurement report of the first cell and the second measurement report of the second cell to the source base station. In this way, the electronic device may evaluate, based on the adjusted first parameter, whether the first cell meets the reporting condition. For example, if the adjusted first parameter does not meet the measurement reporting condition, no measurement reporting is required. In this application, a greater difference between the first threshold and a second parameter that is less than the first threshold, that is, a smaller second parameter indicates a larger adjustment range of the first parameter corresponding to the second parameter. In this case, the first parameter may be changed from meeting the measurement reporting condition before the adjustment to failing to meet the measurement reporting condition after the adjustment.

In a possible implementation, before the determining, based on a first parameter of each of the at least one neighboring cell, whether a measurement reporting condition is met, the method further includes: The electronic device detects that a second parameter of a third cell is less than a third threshold, and when the determining of the measurement reporting condition is performed, precludes the third cell, where the third threshold is less than or equal to the first threshold. In this way, before performing the determining of the measurement reporting condition, the electronic device in this application may detect whether a second parameter of the at least one cell is less than a third threshold. The third threshold is used to indicate that service quality of the cell is poor. To be specific, if the electronic device accesses the cell, service quality of the electronic device is affected.

In a possible implementation, the first parameter is a reference signal received power (Reference Signal Receiving Power, RSRP), and the second parameter is a signal to interference plus noise ratio (Signal to Interference plus Noise Ratio, SINR) and/or reference signal received quality (Reference Signal Received Quality, RSRQ). In this way, the electronic device in this application may pre-evaluate service quality of a cell based on the SINR and/or the RSRQ, and determine, based on a second parameter, that is, a value of the SINR and/or the RSRQ, whether it is necessary to proactively intervene in a value of the RSRP, so that measurement reporting for a cell with poor service quality is suppressed on the electronic device side, thereby reducing a probability that a base station side selects the cell with poor service quality during decision-making.

According to a second aspect, this application provides an electronic device. The electronic device accesses a serving cell of a source base station, and the electronic device includes: one or more processors, a memory, and one or more computer programs. The one or more computer programs are stored in the memory, and when the computer programs are executed by the one or more processors, the electronic device is enabled to perform the following steps: obtaining communication quality parameters of at least one neighboring cell, where the communication quality parameters include a first parameter and a second parameter; detecting that a second parameter of a first cell is less than a first threshold, and adjusting a first parameter of the first cell, where the adjusted first parameter is less than the unadjusted first parameter, and the first cell belongs to the at least one neighboring cell; and sending a first measurement report of the first cell and a second measurement report of a second cell to the source base station, where the first measurement report of the first cell includes the adjusted first parameter, the second measurement report of the second cell includes a first parameter of the second cell, the first parameter of the second cell is greater than the first threshold, and the second cell belongs to the at least one neighboring cell.

In a possible implementation, when the computer programs are executed by the one or more processors, the electronic device is enabled to perform the following step: receiving handover indication information sent by the source base station, where the handover indication information includes identification information of the second cell, the handover indication information is used to indicate the electronic device to be handed over from the serving cell to the second cell, and the handover indication information is sent after the source base station determines, based on the first measurement report and the second measurement report, to hand over the electronic device to the second cell.

In a possible implementation, when the computer programs are executed by the one or more processors, the electronic device is enabled to perform the following steps: adjusting the first parameter of the first cell based on the following formula:

adjusted first parameter = second threshold - (first threshold - second parameter) * preset coefficient.

In a possible implementation, when the computer programs are executed by the one or more processors, the electronic device is enabled to perform the following steps: determining, based on a first parameter of each of the at least one neighboring cell, whether a measurement reporting condition is met; and detecting that the adjusted first parameter of the first cell and the first parameter of the second cell meet the measurement reporting condition, and sending the first measurement report of the first cell and the second measurement report of the second cell to the source base station.

In a possible implementation, when the computer programs are executed by the one or more processors, the electronic device is enabled to perform the following steps: detecting that a second parameter of a third cell is less than a third threshold, and when the determining of the measurement reporting condition is performed, precluding the third cell, where the third threshold is less than or equal to the first threshold.

In a possible implementation, the first parameter is a reference signal received power (Reference Signal Receiving Power, RSRP), and the second parameter is a signal to interference plus noise ratio (Signal to Interference plus Noise Ratio, SINR) and/or reference signal received quality (Reference Signal Received Quality, RSRQ).

According to a third aspect, this application provides a computer-readable medium, configured to store a computer program, where the computer program includes instructions for performing the method in any one of the first aspect or the possible implementations of the first aspect.

According to a fourth aspect, this application provides a computer program, where the computer program includes instructions for performing the method in any one of the first aspect or the possible implementations of the first aspect.

According to a fifth aspect, this application provides a chip, where the chip includes a processing circuit and a transceiver pin. The transceiver pin and the processing circuit communicate with each other through an internal connection channel. The processing circuit performs the method in any one of the first aspect or the possible implementations of the first aspect, to control a receive pin to receive a signal, and to control a transmit pin to send a signal.

According to a sixth aspect, this application provides a communication system, where the system includes the electronic device and the base station in the first aspect.

**BRIEF DESCRIPTION OF DRAWINGS**

FIG. 1 is a schematic diagram of a structure of an electronic device shown by way of example;
FIG. 2 is a schematic diagram of a structure of a mobile communication module shown by way of example;
FIG. 3 is a schematic flowchart of an access method shown by way of example;
FIG. 4 is a schematic diagram of a measurement result shown by way of example;
FIG. 5 is a schematic diagram of a terminal handover procedure shown by way of example;
FIG. 6 is a schematic flowchart of a measurement reporting method according to an embodiment of this application;
FIG. 7 is a schematic flowchart of an evaluation process shown by way of example;
FIG. 8 is a schematic flowchart of an evaluation process shown by way of example; and
FIG. 9 is a schematic diagram of a structure of an apparatus shown by way of example.

**DESCRIPTION OF EMBODIMENTS**

The technical solutions of the embodiments of this application are clearly and completely described below with reference to the accompanying drawings of the embodiments of this application. Clearly, the described embodiments are some rather than all of the embodiments of this application. All other embodiments obtained by persons of ordinary skill in the art based on the embodiments of this application without creative efforts shall fall within the protection scope of this application.

In this specification, the term "and/or" is merely used to describe an association relationship between associated objects, and indicates that three relationships may exist. For example, A and/or B may indicate the following three cases: Only A exists, both A and B exist, and only B exists.

The terms "first", "second", and the like in the specification and claims of the embodiments of this application are used to distinguish between different objects, and are not used to describe a particular order of the objects. For example, a first target object, a second target object, and the like are used to distinguish between different target objects, and are not used to describe a particular order of target objects.

In the embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, the words such as "example" or "for example" are intended to present related concepts in a specific manner.

In the description of the embodiments of this application, unless otherwise stated, "a plurality of" means two or more. For example, a plurality of processing units refer to two or more processing units, and a plurality of systems refer to two or more systems.

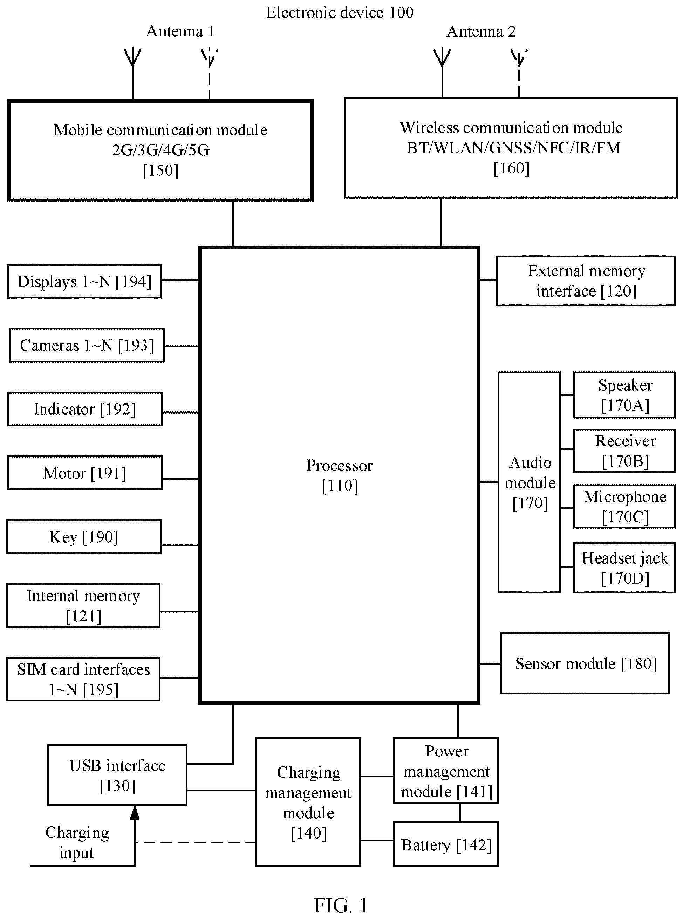

FIG. 1 is a schematic diagram of a structure of an electronic device 100. It should be understood that the electronic device 100 shown in FIG. 1 is merely an example of the electronic device, and the electronic device 100 may have more or fewer components than those shown in the figure, may combine two or more components, or may have different component configurations. The various components shown in FIG. 1 may be implemented in hardware that includes one or more signal processing and/or application-specific integrated circuits, software, or a combination of hardware and software. In this embodiment of this application, the electronic device 100 may also be referred to as a terminal. The terminal may be an electronic device that has a mobile communication function, such as a mobile phone, an in-vehicle device, a wearable device, or a smart home device. This is not limited in this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, and a subscriber identity module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a solution for wireless communication that is applied to the electronic device 100 and that includes 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert, by using the antenna 1, an amplified signal into an electromagnetic wave for radiation. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem processor may be an independent device. In some other embodiments, the modem processor may be independent of the processor 110 and disposed in a same device as the mobile communication module 150 or another functional module.

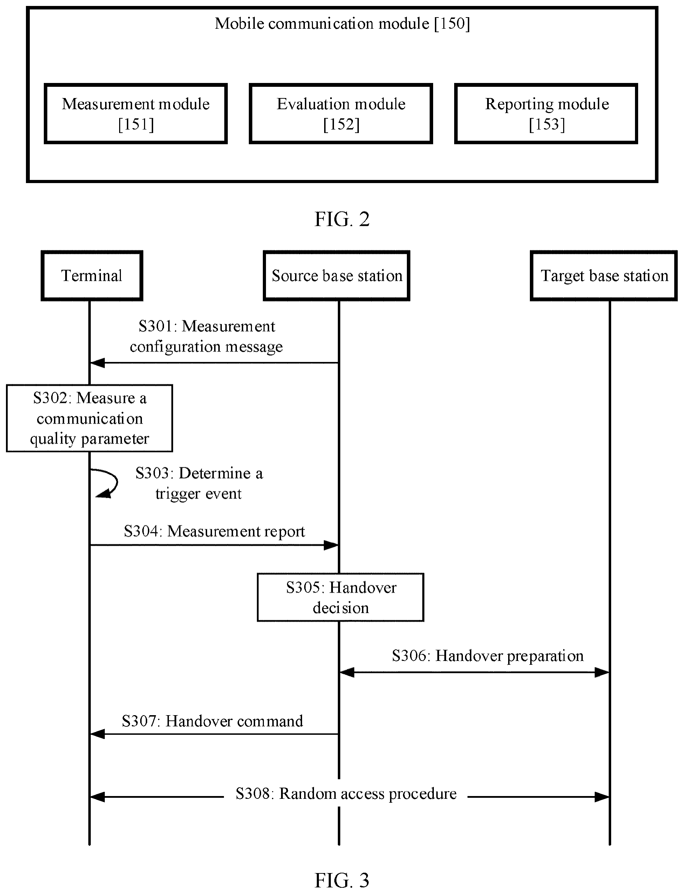

FIG. 2 is a schematic diagram of a structure of a mobile communication module 150 shown by way of example. Referring to FIG. 2, the mobile communication module 150 includes but is not limited to a measurement module 151, an evaluation module 152, and a reporting module 153.

The measurement module 151 is configured to measure a communication quality parameter of a source cell (that is, a currently accessed cell) and a communication quality parameter of a surrounding cell. In this embodiment of this application, the source cell belongs to a source base station. To be specific, the source base station is a base station currently accessed by a terminal. The surrounding cell includes but is not limited to another cell of the source base station and/or one or more cells of another base station.

The evaluation module 152 is configured to: evaluate the communication quality parameter obtained through measurement, and determine whether a measurement report needs to be reported.

The reporting module 153 is configured to report the measurement report.

In a possible implementation, the foregoing modules may alternatively be executed by the processor. This is not limited in this application.

In another possible implementation, the foregoing modules may be chips or computer programs. This is not limited in this application.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include 1 or N displays 194, where N is a positive integer greater than 1.

The electronic device 100 may implement a shooting function by using the ISP, the camera 193, the video codec, the GPU, the display 194, the application processor, and the like.

The internal memory 121 may be configured to store computer-executable program code, and the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

Before the measurement reporting in the embodiments of this application is described, a terminal access manner in embodiments of conventional technologies is first briefly described. FIG. 3 is a flowchart of an access method shown by way of example. Referring to FIG. 3, the method specifically includes but is not limited to the following steps:

S301: A source base station sends a measurement configuration message to a terminal.

Specifically, the terminal accesses a cell, and the terminal in a connected state may receive a configuration message sent by a network side, that is, the source base station. The configuration message includes but is not limited to identification information, a measurement threshold, and a measurement reporting condition of at least one frequency.

For example, the measurement threshold is used to indicate whether the terminal needs to perform cell measurement. It should be noted that the cell measurement described in this application refers to performing cell measurement on a non-serving cell, and measurement of a serving cell (that is, a cell currently accessed by the terminal) is continuously performed. For example, the terminal periodically measures service quality of the serving cell. In an example, if the service quality of the serving cell is greater than the measurement threshold, the terminal does not need to perform cell measurement. In another example, if the service quality of the serving cell is less than the measurement threshold, the terminal performs cell measurement on at least one frequency configured on the network side, that is, step 302.

In this embodiment of this application, a measurement parameter (that is, a communication quality parameter) of service quality of a cell may include but is not limited to: a reference signal received power (Reference Signal Receiving Power, RSRP), a signal to interference plus noise ratio (Signal to Interference plus Noise Ratio, SINR), reference signal received quality (Reference Signal Received Quality, RSRQ), and the like. A specific requirement may be configured according to a network side. This is not limited in this application.

For example, the measurement reporting condition is used to indicate whether the terminal reports a measurement report of a neighboring cell. In this embodiment of this application, an event A3 is used as an example for description. In another embodiment, another event may alternatively be used. This is not limited in this application. Specifically, if the service quality of the neighboring cell meets the measurement reporting condition for the event A3, the terminal reports the event A3, the measurement report of the serving cell, and the measurement report of the neighboring cell to a serving base station (that is, the source base station). The measurement report includes but is not limited to the service quality (that is, the communication quality parameter) of the cell.

It should be noted that if the terminal reports the event A3, it indicates that the terminal needs to be handed over to another neighboring cell. It may alternatively be understood that the current serving cell is no longer suitable for terminal access. Therefore, when the base station receives the event A3 and the measurement report of the neighboring cell that are reported by the terminal, the base station indicates the terminal to be handed over to the neighboring cell.

For example, the measurement reporting condition for the event A3 includes but is not limited to evaluation duration and a measurement reporting threshold for the event A3. Specifically, after obtaining the service quality of the cell, the terminal may perform evaluation on the service quality of the cell. In an evaluation process, the terminal may evaluate, within evaluation duration, whether the service quality of the neighboring cell is greater than the service quality of the serving cell, and a difference between the service quality of the neighboring cell and the service quality of the serving cell is greater than the measurement reporting threshold for the event A3. For example, the measurement reporting threshold for the event A3 may be 3 dBm, and the evaluation duration may be 320 ms. In other words, within 320 ms, the terminal continuously obtains service quality of the neighboring cell, and evaluates service quality obtained each time. If the service quality of the neighboring cell meets the measurement reporting threshold for the event A3 each time, the terminal may determine that the neighboring cell meets the measurement reporting condition for the event A3. It should be noted that various parameters in the measurement reporting condition for the event A3, including the evaluation duration and the measurement reporting threshold for the event A3, are merely examples. Specific values may be set according to an actual requirement. This is not limited in this application.

S302: The terminal measures a communication quality parameter.

For example, the terminal may perform cell measurement on a frequency configured on a network side to obtain a frequency measurement result, where the frequency measurement result includes a cell communication quality parameter of at least one cell of the frequency. The communication quality parameter includes at least one of the RSRP, the RSRQ, and the SINR.

S303: The terminal determines a trigger event.

For example, in this embodiment, the terminal may determine, based on a measurement reporting condition delivered by the source base station, whether to trigger an event A3.

Specifically, as described above, the terminal may evaluate the service quality of the neighboring cell based on the measurement reporting condition for the event A3, including the evaluation duration and the measurement reporting threshold for the event A3. If the service quality of the neighboring cell obtained by the terminal meets the measurement reporting threshold for the event A3 within the evaluation duration, for example, the service quality of the neighboring cell is greater than the service quality of the serving cell, and the difference is greater than or equal to 3 dBm (that is, the measurement reporting threshold), it is determined that the evaluation succeeds; otherwise, it is determined that the evaluation fails.

In an example, if event A3 reporting is not triggered, S302 is repeatedly performed.

In another example, if it is determined to trigger event A3 reporting, S304 is performed.

S304: The terminal sends a measurement report to the source base station.

For example, the terminal reports the event A3, the measurement report of the serving cell, and the measurement report of the neighboring cell to the source base station. The measurement report includes but is not limited to the service quality (that is, the communication quality parameter) of the cell, and the communication quality parameter includes but is not limited to at least one of the RSRP, the RSRQ, and the SINR.

S305: The source base station performs a handover decision.

Specifically, in a handover application scenario, the source base station may determine, based on the measurement report reported by the terminal, whether the terminal needs to perform cell handover. If a determining result is yes, a handover procedure may be performed. If the determining result is no, the procedure ends.

S306: The source base station performs handover preparation with a target base station.

For example, if the source base station determines that the terminal needs to perform cell handover, the source base station exchanges, with the target base station, related information required for handover. For specific details, refer to embodiments of conventional technologies. This is not limited in this application.

It should be noted that the target base station may be the source base station, that is, the terminal is to be handed over to another cell of the source base station. The target base station may alternatively be another base station, that is, the terminal is to be handed over to a cell of another base station. This is not limited in this application, and repeated description is not provided below.

S307: The source base station sends a handover command to the terminal.

For example, the source base station sends the handover command to the terminal. The handover command includes but is not limited to identification information and related configuration of a target cell, and is used to instruct the terminal to be handed over to the target cell.

S308: The terminal performs a random access procedure.

In response to the received handover command, the terminal performs the random access procedure to be handed over to (that is, access) the target cell of the target base station. For a specific procedure, refer to the conventional technology. This is not limited in this application.

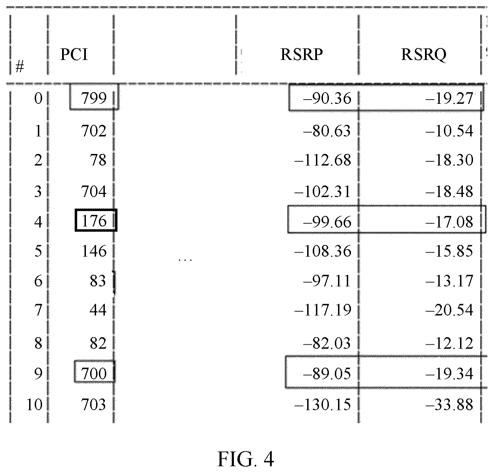

For example, to enable a terminal user to perceive strong network coverage, the network side (for example, the source base station) usually uses only the RSRP as a handover condition. Therefore, during policy configuration, the terminal is usually required to report only the RSRP of the cell, and does not need to report the RSRQ and the SINR. Even if the network configures reporting of the RSRP, the RSRQ, and the SINR, the network refers to only the RSRP when making a handover decision. In this processing manner, there is no problem in most scenarios, so that a terminal user can perceive that network coverage is quite good. However, in some scenarios, for a reason such as interference, an RSRP of a cell or several cells is quite good, but RSRQ thereof is quite poor. In this case, although the terminal accesses a cell with a best RSRP, service experience is quite poor. For example, FIG. 4 is a schematic diagram of a measurement result shown by way of example. Referring to FIG. 4, the terminal obtains measurement results of a plurality of cells, including but not limited to: identification information (for example, a physical cell identifier (Physical Cell Identifier, PCI)), an RSRP, RSRQ, and the like of the cell. The terminal reports measurement results of PCI799, PCI700, and PCI176 to the source base station. Correspondingly, the network side optionally indicates, based on the RSRP, the terminal to be handed over to PCI799 or PCI700. However, because RSRQ values of PCI799 and PCI700 are low (generally, a service is affected when an RSRQ value is lower than -15 db), a service (for example, a call service or another service, which is not limited in this application) of the terminal cannot work normally.

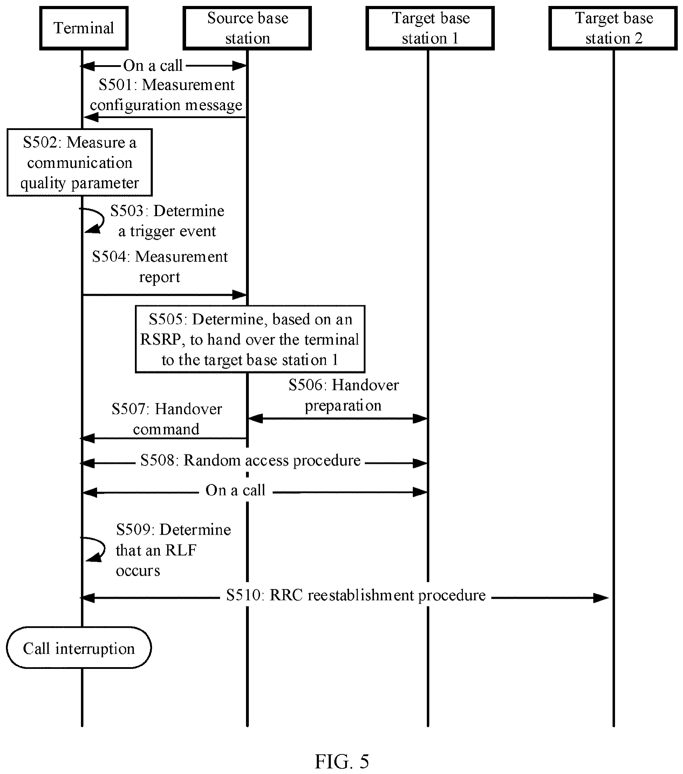

A scenario of RSRP handover decision and impact on a service are described below in detail by using specific examples. FIG. 5 is a schematic diagram of a terminal handover procedure shown by way of example. Referring to FIG. 5, the procedure specifically includes but is not limited to the following steps:

S501: A source base station sends a measurement configuration message to a terminal.

For example, the terminal accesses the source base station and performs a call service. In this embodiment, the call service is used merely as an example for description. This is not limited in this application.

For specific details, refer to S301. Details are not described herein again.

S502: The terminal measures a communication quality parameter.

For example, in this example, after the terminal detects that service quality of a serving cell is less than a measurement threshold, the terminal starts measurement.

The terminal detects that an RSRP of a neighboring cell 1 (referred to as a neighboring cell for short) is -80 dbm and RSRQ thereof is -18 dbm. An RSRP of a neighboring cell 2 is -100 dbm, and RSRQ thereof is -13 dbm. The neighboring cell 1 belongs to a target base station 1, and the neighboring cell 2 belongs to a target base station 2.

S503: The terminal determines a trigger event.

S504: The terminal sends a measurement report to the source base station.

For example, the terminal sends a measurement result of the neighboring cell 1 and a measurement result of the neighboring cell 2 to the source base station, including but not limited to identification information of a neighboring cell and a communication quality parameter (including an RSRP, or an RSRP and RSRQ) of the neighboring cell.

S505: The source base station performs a handover decision.

Based on the RSRP of the neighboring cell 1 and the RSRP of the neighboring cell 2, the source base station determines to hand over the terminal to the neighboring cell 1, that is, the cell with a higher RSRP.

S506: The source base station performs handover preparation with the target base station 1.

S507: The source base station sends a handover command to the terminal.

S508: The terminal performs a random access procedure.

S509: The terminal determines that an RLF occurs.

For example, the terminal accesses a cell of the target base station 2. For specific details, refer to the foregoing descriptions. Details are not described herein again. The terminal may continue to perform the call service.

However, because the RSRQ of the neighboring cell 1 is low, that is, interference of the neighboring cell 1 is strong, the terminal cannot perform decoding correctly, and consequently a bit error rate of the terminal is excessively high, thereby affecting a service (for example, call discontinuity) of the terminal. After consecutive bit errors occur, the terminal detects that a radio link failure (Radio link failure, RLF) problem occurs.

S510: The terminal performs a radio resource control (Radio Resource Control, RRC) reestablishment procedure.

For example, the terminal performs a cell search process to reselect a camping cell (that is, a neighboring cell 2 of the target base station 2), so as to initiate a random access process and perform a random access procedure. After the terminal successfully camps on the neighboring cell 2, the base station (to be specific, the base station on which the terminal currently camps, that is, the target base station 1) exchanges, with the target base station 2, related configuration information required for handing over the terminal to the target base station 2, for example, including but not limited to information such as a PCI (Physical Cell Identity, physical cell identifier) of a source cell (that is, a cell on which the terminal camps before RRC reestablishment), identification information of the terminal, and a reestablishment cause.

The RRC reestablishment procedure defined in a protocol includes a normal RRC reestablishment procedure and an abnormal RRC reestablishment procedure. In an actual application, when the terminal performs cell selection, a selected target cell and the source cell may belong to a same base station or different base stations. In a scenario in which the target cell and the source cell belong to a same base station, the target cell may obtain communication context information of the UE in the source cell, so that the RRC reestablishment process is successfully completed.

However, in a scenario in which the target cell and the source cell belong to different base stations, the target cell cannot obtain the communication context information of the UE in the source cell. Consequently, the normal RRC reestablishment process cannot be completed, and an RRC reestablishment rejection message has to be sent to the terminal, and the terminal releases an RRC connection. In the scenario in which the target cell and the source cell belong to a same base station, connection of a service at an application layer on the terminal side can be completed normally, and service interruption time is short. In the scenario in which the target cell and the source cell belong to different base stations, because the RRC connection is completely released on the base station side, the terminal needs to re-initiate a service request process with the base station side, and a core network re-assigns a service to complete service connection. Consequently, service connection time at the application layer is long, affecting user experience.

Optionally, after the terminal reestablishes access to the target base station 2, the terminal may fail to access the target base station 2 because there is no previous context or a part of context is missing. Consequently, the service of the terminal is interrupted, for example, the call service is interrupted.

To resolve the foregoing problems, an embodiment of this application provides a measurement reporting method. A terminal may not report a cell with a low RSRP or may suppress RSRPs of some cells, so as to avoid a problem that the terminal is handed over to a bad cell (that is, a cell with a low RSRP), and a service of the terminal is interrupted.

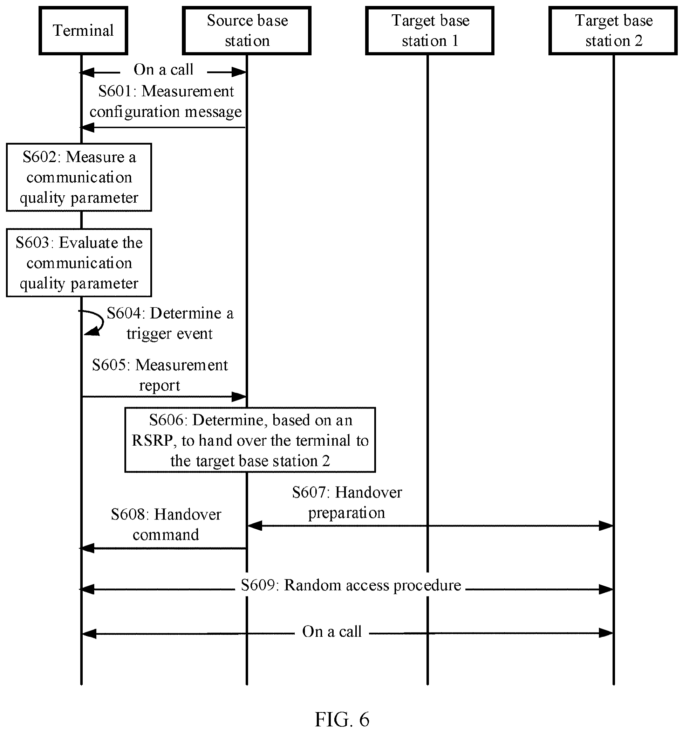

FIG. 6 is a schematic flowchart of a measurement reporting method according to an embodiment of this application. Referring to FIG. 6, the method specifically includes but is not limited to the following steps:

S601: A source base station sends a measurement configuration message to a terminal.
S602: The terminal measures a communication quality parameter.

For example, still, the terminal detects that an RSRP of a neighboring cell 1 (referred to as a neighboring cell for short) is -80 dbm and RSRQ thereof is -18 dbm. An RSRP of a neighboring cell 2 is -100 dbm, and RSRQ thereof is -13 dbm. The neighboring cell 1 belongs to a target base station 1, and the neighboring cell 2 belongs to a target base station 2.

For other parts not described, refer to related descriptions in FIG. 5. Details are not described herein again.

S603: The terminal evaluates the communication quality parameter.

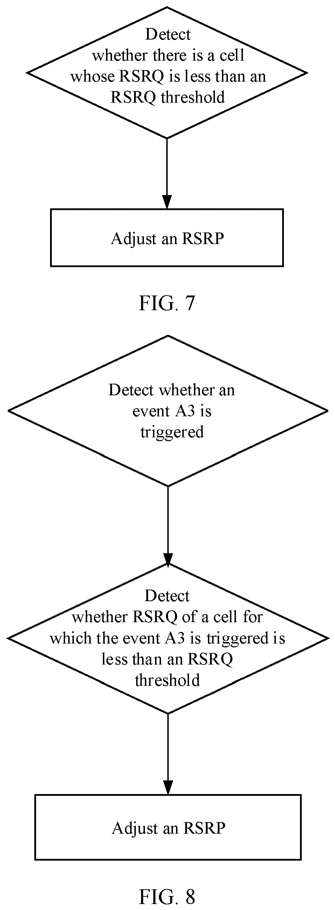

FIG. 7 is a schematic flowchart of an evaluation process shown by way of example. Referring to FIG. 7, in this embodiment, the terminal (specifically the evaluation module in FIG. 2) detects, based on communication quality parameters of all cells (for example, the neighboring cell 1 and the neighboring cell 2) obtained by the terminal (specifically the measurement module in FIG. 2), whether there is a cell whose RSRQ is less than an RSRQ threshold.

In an example, if the terminal detects that there is one or more cells whose RSRQ is less than the RSRQ threshold (for example, -16 dbm, which may be set according to an actual requirement and is not limited in this application), the terminal adjusts an RSRP of the one or more cells based on a formula (1). The formula is as follows:

$$RSRP' = RSRP\ threshold - (RSRQ\ threshold - RSRQ) * preset\ coefficient \qquad (1)$$

In this example, the RSRP threshold is -110 dbm. In another embodiment, the RSRP threshold may be set according to an actual requirement, and is not limited in this application. Optionally, the RSRP threshold may be set based on different services. For example, the RSRP threshold corresponding to the call service may be -110 dbm, and the RSRP of another service may be -115 dbm. This is not limited in this application.

The RSRQ threshold is -16 dbm in this example. The threshold may be understood as follows: If the RSRQ is less than the threshold, the service cannot be normally performed, for example, a problem of an excessively high bit error rate occurs. The value may be understood as an experimental value or an empirical value.

The RSRQ is an RSRQ value of a corresponding cell obtained by the terminal.

The preset coefficient is 5 in this example, and may alternatively be set according to an actual requirement in another embodiment. This is not limited in this application.

To be specific, in this embodiment of this application, after detecting that an RSRQ of any cell is less than the RSRQ threshold, the terminal may determine that the cell is a bad cell. The terminal may adjust an RSRP of the cell by using the formula (1), so as to suppress the RSRP of the bad cell.

For example, the neighboring cell 1 in the foregoing description is used as an example. Based on the RSRQ of the neighboring cell 1, the terminal determines that the RSRQ (that is, -18 dbm) of the neighboring cell 1 is less than the RSRQ threshold (-16 dbm), that is, determines that the neighboring cell 1 is a bad cell. Based on the formula (1), the terminal adjusts the RSRP of the neighboring cell 1 to obtain an RSRP of -120 dbm after adjustment (which may also be referred to as after evaluation or after suppression), so as to achieve an effect of suppressing the RSRP. For another example, the neighboring cell 2 in the foregoing description is used as an example. Based on the RSRQ of the neighboring cell 2, the terminal determines that the RSRQ (-13 dbm) of the neighboring cell 2 is greater than the RSRQ threshold, and determines that the neighboring cell 1 is a non-bad cell, and the terminal does not need to adjust an RSRP of the neighboring cell 2.

In this example, the terminal determines, based on the adjusted RSRP of each cell, whether to trigger an event A3. Optionally, the adjusted RSRP may trigger an event A3, or may not trigger an event A3, specifically depending on a reporting condition for the event A3 and an adjusted value of the RSRP. Optionally, in some instances, the unadjusted RSRP may meet the reporting condition for the event A3, whereas the adjusted RSRP may not meet the reporting condition for the event A3. This is not limited in this application.

In this example, if the terminal detects that the RSRQ of each cell is greater than the RSRQ threshold, S604 continues to be performed.

In another possible implementation, FIG. 8 is a schematic flowchart of an evaluation process shown by way of example. Referring to FIG. 8, in this embodiment, the terminal detects, based on a communication quality parameter of each cell, whether an event A3 is triggered.

In an example, if there is no neighboring cell for which the event A3 is triggered, S602 is repeatedly performed. In another example, if there is a neighboring cell for which the event A3 is triggered, that is, a neighboring cell whose RSRP meets the reporting condition for the event A3, the terminal may detect whether the RSRQ corresponding to the neighboring cell for which the event A3 is triggered is less than the RSRQ threshold. If yes, the corresponding RSRP may be adjusted based on the formula (1). If no, S604 may continue to be performed. For specific details, refer to descriptions in FIG. 7. Details are not described herein again.

In this example, the terminal performs evaluation again based on the adjusted RSRP to detect whether an event A3 is triggered. In some instances, after the terminal adjusts the RSRP, the RSRP of one or more cells for which the reporting condition for the event A3 is originally triggered may no longer meet the reporting condition for the event A3. This is not limited in this application. In this example, for some cells that originally do not meet the measurement reporting condition, that is, have a low RSRP, no subsequent adjustment needs to be performed on these cells, thereby reducing a computing burden of an electronic device and improving processing efficiency of the electronic device in an evaluation phase. For example, the neighboring cell 1 and the neighboring cell 2 in the foregoing description are still used as examples. The terminal detects that both the neighboring cell 1 and the neighboring cell 2 meet the measurement reporting condition. In this example, another neighboring cell that does not meet the measurement reporting condition may exist. Correspondingly, in a subsequent evaluation process, that is, a step of determining the RSRQ, the terminal only needs to perform determining on the neighboring cell 1 and the neighboring cell 2, and the another neighboring cell that does not meet the measurement reporting condition does not need to participate in the determining. For example, the terminal may detect whether the RSRQ of each of the neighboring cell 1 and the neighboring cell 2 is less than the RSRQ threshold. In this example, if the terminal detects that the RSRQ of the neighboring cell 1 is less than the RSRQ threshold, the terminal adjusts the RSRP of the neighboring cell 1. For a specific adjustment manner, refer to the foregoing description. Details are not described herein again. If the terminal detects that the RSRQ of the neighboring cell 2 is greater than the RSRQ threshold, the terminal does not adjust the RSRP of the neighboring cell 2. The terminal may perform evaluation based on a current RSRP (that is, an adjusted RSRP) of the neighboring cell 1, so as to detect whether the measurement reporting condition is met.

In still another possible implementation, the terminal may set an RSRQ threshold, and the threshold may be less than or equal to the RSRQ threshold involved in FIG. 7 and FIG. 8. In this example, if the terminal detects that the RSRQ of the cell for which the event A3 is triggered is less than the RSRQ threshold, the terminal may suppress measurement reporting of the cell. To be specific, in S605, the terminal does not report a measurement result of the cell whose RSRQ is less than the RSRQ threshold to the source base station. Optionally, before evaluating whether the event A3 is triggered, terminal may alternatively move one or more cells whose RSRQ is less than the RSRQ threshold out of a queue. In other words, when evaluating whether the event A3 is triggered, the terminal no longer evaluates these cells (that is, bad cells).

In still another possible implementation, when detecting that the RSRQ of one or more cells is less than the RSRQ threshold, the terminal may further adjust a measurement reporting threshold for the event A3, for example, add a preset threshold (which may be set according to an actual requirement, and is not limited in this application) to the measurement reporting threshold for the event A3, so as to suppress measurement reporting of some cells.

In still another possible implementation, the terminal may set an evaluation execution condition, and perform S603 when the evaluation execution condition is met. Optionally, the evaluation execution condition may include but is not limited to a scenario limitation, a region limitation, and the like. For example, in some regions such as other countries, S603 is not performed. For another example, the scenario setting may be as follows: If the terminal may learn in advance that the base station makes a decision based on the RSRP and the RSRQ (which may alternatively be the SINR or the like), S603 may not be performed.

In this embodiment of this application, the foregoing possible implementations may be performed together.

S604: The terminal determines a trigger event.

S605: The terminal sends a measurement report to the source base station.

In this embodiment of this application, the measurement report sent by the terminal is a measurement report corresponding to a cell for which the reporting condition for the event A3 is still triggered after the RSRP is adjusted. In addition, a reported RSRP value of one or more cells may be an adjusted, that is, a suppressed RSRP value, thereby reducing a probability that a bad cell is selected.

For example, the value in the foregoing description is still used as an example. After the terminal adjusts the RSRP of the neighboring cell 1, the RSRP value of the neighboring cell is updated to -125 dbm. Correspondingly, the RSRP value in the measurement report of the neighboring cell 1 sent by the terminal to the source base station is -125 dbm. The RSRP value in the measurement report of the neighboring cell 2 sent by the terminal to the source base station is -100 dbm. In other words, the RSRP value of the neighboring cell 1 is originally greater than the RSRP value of the neighboring cell 2, that is, originally, the terminal is preferentially handed over to the neighboring cell 1. In this embodiment of this application, after the RSRP of the bad cell (that is, the neighboring cell 1) is suppressed (or it may be that the measurement report of the neighboring cell 1 is not reported after evaluation), the terminal is preferentially handed over to the neighboring cell 2, that is, a probability that the neighboring cell 1 is selected is reduced, thereby achieving an effect of suppressing the neighboring cell 1.

S606: The source base station performs a handover decision.

For example, the source base station makes a decision based on the received measurement report. As described above, the source base station may receive a measurement report of a suppressed cell, or may not receive a measurement report corresponding to a bad cell. In this example, the foregoing value is still used as an example. The source base station determines, based on the RSRP value in the measurement report of the neighboring cell 1 and the RSRP value in the measurement report of the neighboring cell 2, to hand over the terminal to the neighboring cell 2 of the target base station 2.

S607: The source base station performs handover preparation with the target base station 2.

S608: The source base station sends a handover command to the terminal.

S609: The terminal performs a random access procedure.

For example, the terminal may access a target cell (that is, the neighboring cell 2) of the target base station 2 based on an indication of the source base station, and continue to perform a call service. For specific details, refer to the related content in the foregoing description. Details are not described herein again.

It should be noted that in this application, the RSRQ is used merely as an example for description. The measurement reporting method in this embodiment of this application may also be combined with the SINR. An implementation of the SINR is the same as that of the RSRQ. A corresponding SINR threshold and each threshold in an adjustment algorithm may be set according to an actual requirement. This is not limited in this application. Certainly, in the evaluation process, the measurement reporting method in this embodiment of this application may alternatively be combined with another communication quality parameter. Examples are not described one by one in this application.

In a possible implementation, the terminal may record the identification information of the bad cell. When performing the steps shown in FIG. 6 next time, the terminal may detect, by searching for historical information, whether a measured cell includes a bad cell. If a bad cell exists, measurement reporting of the bad cell may be directly suppressed, that is, the evaluation step is not performed on the bad cell.

In this embodiment of this application, the bad cell is a cell whose parameters such as the RSRQ and/or the SINR are less than a preset threshold. An RSRP of such a cell may or may not meet a measurement reporting threshold. This is not limited in this application.

It may be understood that, to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint of the technical solutions. Persons skilled in the art may use different methods to implement the described functions with reference to embodiments for each particular application, but it should not be considered that the implementation goes beyond the scope of this application.

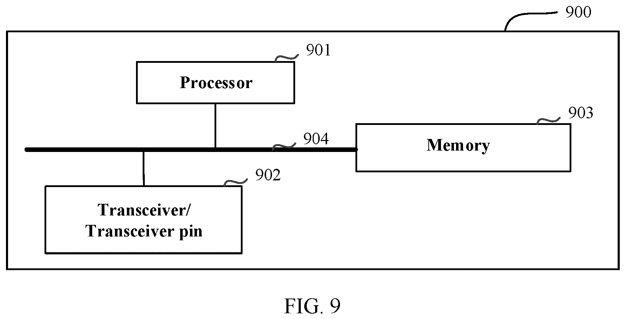

In an example, FIG. 9 is a schematic block diagram of an apparatus 900 according to an embodiment of this application. The apparatus 900 may include a processor 901 and a transceiver/transceiver pin 902. Optionally, a memory 903 is further included.

Components in the apparatus 900 are coupled together by using a bus 904. In addition to a data bus, the bus 904 further includes a power bus, a control bus, and a status signal bus. However, for clarity of description, various buses are collectively referred to as the bus 904 in the figure.

Optionally, the memory 903 may be configured to store the instructions in the foregoing method embodiments. The processor 901 may be configured to: execute the instructions in the memory 903, control a receive pin to receive a signal, and control a transmit pin to send a signal.

The apparatus 900 may be the electronic device or a chip in the electronic device in the foregoing method embodiments.

All related content of the steps in the foregoing method embodiments may be cited to function descriptions of corresponding functional modules. Details are not described herein again.

An embodiment further provides a computer storage medium. The computer storage medium stores computer instructions. When the computer instructions are run on an electronic device, the electronic device is enabled to perform the steps of the related method to implement the method in the foregoing embodiments.

An embodiment further provides a computer program product. When the computer program product runs on a computer, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the method in the foregoing method embodiments.

The electronic device, the computer storage medium, the computer program product, or the chip provided in the embodiments is configured to perform the corresponding method provided above. Therefore, for beneficial effects that can be achieved by the electronic device, the computer storage medium, the computer program product, or the chip, refer to the beneficial effects in the corresponding method provided above. Details are not described herein again.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. A measurement reporting method, applied to an electronic device, wherein the electronic device accesses a serving cell of a source base station, and the method comprises:

   obtaining communication quality parameters of at least one neighboring cell, wherein the communication quality parameters comprise a first parameter and a second parameter;
   detecting that a second parameter of a first cell is less than a first threshold, and adjusting a first parameter of the first cell, wherein the adjusted first parameter is less than the unadjusted first parameter, and the first cell belongs to the at least one neighboring cell; and
   sending a first measurement report of the first cell and a second measurement report of a second cell to the source base station, wherein the first measurement report of the first cell comprises the adjusted first parameter, the second measurement report of the second cell comprises a first parameter of the second cell, a second parameter of the second cell is greater than the first threshold, and the second cell belongs to the at least one neighboring cell.

2. The method according to claim 1, wherein the method further comprises:
   receiving handover indication information sent by the source base station, wherein the handover indication information comprises identification information of the second cell, the handover indication information is used to indicate the electronic device to be handed over from the serving cell to the second cell, and the handover indication information is sent after the source base station determines, based on the first measurement report and the second measurement report, to hand over the electronic device to the second cell.

3. The method according to claim 1, wherein the adjusting a first parameter of the first cell comprises:
   adjusting the first parameter of the first cell based on the following formula:

   adjusted first parameter = second threshold - (first threshold - second parameter) * preset coefficient.

4. The method according to any one of claims 1 to 3, wherein the sending a first measurement report of the first cell and a second measurement report of a second cell to the source base station comprises:

   determining, based on a first parameter of each of the at least one neighboring cell, whether a measurement reporting condition is met; and
   detecting that the adjusted first parameter of the first cell and the first parameter of the second cell meet the measurement reporting condition, and sending the first measurement report of the first cell and the second measurement report of the second cell to the source base station.

5. The method according to claim 4, wherein before the determining, based on a first parameter of each of the at least one neighboring cell, whether a measurement reporting condition is met, the method further comprises:
detecting that a second parameter of a third cell is less than a third threshold, and when the determining of the measurement reporting condition is performed, precluding the third cell, wherein the third threshold is less than or equal to the first threshold.

6. The method according to any one of claims 1 to 5, wherein the first parameter is a reference signal received power (Reference Signal Receiving Power, RSRP), and the second parameter is a signal to interference plus noise ratio (Signal to Interference plus Noise Ratio, SINR) and/or reference signal received quality (Reference Signal Received Quality, RSRQ).

7. An electronic device, wherein the electronic device accesses a serving cell of a source base station, and the electronic device comprises:

   one or more processors, a memory, and
   one or more computer programs, wherein the one or more computer programs are stored in the memory, and when the computer programs are executed by the one or more processors, the electronic device is enabled to perform the following steps:

   obtaining communication quality parameters of at least one neighboring cell, wherein the communication quality parameters comprise a first parameter and a second parameter;
   detecting that a second parameter of a first cell is less than a first threshold, and adjusting a first parameter of the first cell, wherein the adjusted first parameter is less than the unadjusted first parameter, and the first cell belongs to the at least one neighboring cell; and
   sending a first measurement report of the first cell and a second measurement report of a second cell to the source base station, wherein the first measurement report of the first cell comprises the adjusted first parameter, the second measurement report of the second cell comprises a first parameter of the second cell, a second parameter of the second cell is greater than the first threshold, and the second cell belongs to the at least one neighboring cell.

8. The electronic device according to claim 7, wherein when the computer programs are executed by the one or more processors, the electronic device is enabled to perform the following step:
receiving handover indication information sent by the source base station, wherein the handover indication information comprises identification information of the second cell, the handover indication information is used to indicate the electronic device to be handed over from the serving cell to the second cell, and the handover indication information is sent after the source base station determines, based on the first measurement report and the second measurement report, to hand over the electronic device to the second cell.

9. The electronic device according to claim 7, wherein when the computer programs are executed by the one or more processors, the electronic device is enabled to perform the following steps:
adjusting the first parameter of the first cell based on the following formula:

adjusted first parameter = second threshold - (first threshold - second parameter) * preset coefficient.

10. The electronic device according to any one of claims 7 to 9, wherein when the computer programs are executed by the one or more processors, the electronic device is enabled to perform the following steps:

   determining, based on a first parameter of each of the at least one neighboring cell, whether a measurement reporting condition is met; and
   detecting that the adjusted first parameter of the first cell and the first parameter of the second cell meet the measurement reporting condition, and sending the first measurement report of the first cell and the second measurement report of the second cell to the source base station.

11. The electronic device according to claim 10, wherein when the computer programs are executed by the one or more processors, the electronic device is enabled to perform the following steps:
detecting that a second parameter of a third cell is less than a third threshold, and when the determining of the measurement reporting condition is performed, precluding the third cell, wherein the third threshold is less than or equal to the first threshold.

12. The electronic device according to any one of claims 7 to 11, wherein the first parameter is a reference signal received power (Reference Signal Receiving Power, RSRP), and the second parameter is a signal to interference plus noise ratio (Signal to Interference plus Noise Ratio, SINR) and/or reference signal received quality (Reference Signal Received Quality, RSRQ).

13. A computer storage medium, comprising computer instructions, wherein when the computer instructions are run on an electronic device, the electronic device is enabled to perform the method according to any one of claims 1-6.

14. A computer program product, wherein when the computer program product runs on a computer, the computer is enabled to perform the method according to any one of claims 1-6.

15. A chip, comprising one or more interface circuits and one or more processors, wherein the interface circuit is configured to: receive a signal from a memory of an electronic device, and send the signal to the processor, the signal comprises computer instructions stored in the memory, and when the processor executes the computer instructions, the electronic device is enabled to perform the method according to any one of claims 1-6.

Electronic device 100

FIG. 1

| Mobile communication module [150] |
|---|

| Measurement module [151] | Evaluation module [152] | Reporting module [153] |
|---|---|---|

FIG. 2

| Terminal | Source base station | Target base station |
|---|---|---|

S301: Measurement configuration message

S302: Measure a communication quality parameter

S303: Determine a trigger event

S304: Measurement report

S305: Handover decision

S306: Handover preparation

S307: Handover command

S308: Random access procedure

FIG. 3

| #  | PCI | | | RSRP | RSRQ | |
|----|-----|---|---|--------|--------|---|
| 0  | 799 | | | −90.36 | −19.27 | |
| 1  | 702 | | | −80.63 | −10.54 | |
| 2  | 78  | | | −112.68 | −18.30 | |
| 3  | 704 | | | −102.31 | −18.48 | |
| 4  | 176 | | | −99.66 | −17.08 | |
| 5  | 146 | | ... | −108.36 | −15.85 | |
| 6  | 83  | | | −97.11 | −13.17 | |
| 7  | 44  | | | −117.19 | −20.54 | |
| 8  | 82  | | | −82.03 | −12.12 | |
| 9  | 700 | | | −89.05 | −19.34 | |
| 10 | 703 | | | −130.15 | −33.88 | |

FIG. 4

FIG. 5

FIG. 6

Detect
whether there is a cell
whose RSRQ is less than an
RSRQ threshold

Adjust an RSRP

FIG. 7

Detect whether an
event A3 is
triggered

Detect
whether RSRQ of a cell for
which the event A3 is triggered is
less than an RSRQ
threshold

Adjust an RSRP

FIG. 8

FIG. 9

## INTERNATIONAL SEARCH REPORT

| International application No. |
| --- |
| **PCT/CN2024/088601** |

### A. CLASSIFICATION OF SUBJECT MATTER

H04W 36/00(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, VCN, ENTXT, DWPI, CNKI, 3GPP: 测量, 上报, 通信质量, 参数, 邻区, 邻小区, 调整, 切换, 阈值, RSRP, RSRQ, SINR, measurement, report+, quality, parameter, neighbor, adjust+, handover, threshold

### C. DOCUMENTS CONSIDERED TO BE RELEVANT

| Category* | Citation of document, with indication, where appropriate, of the relevant passages | Relevant to claim No. |
| --- | --- | --- |
| A | CN 113543237 A (HONOR DEVICE CO., LTD.) 22 October 2021 (2021-10-22) description, paragraphs [0122]-[0151] | 1-15 |
| A | CN 113973346 A (SHENZHEN ONEPLUS TECHNOLOGY CO., LTD.) 25 January 2022 (2022-01-25) entire document | 1-15 |
| A | WO 2022083514 A1 (SPREADTRUM SEMICONDUCTOR (NANJING) CO., LTD.) 28 April 2022 (2022-04-28) entire document | 1-15 |
| A | LENOVO et al. "R2-2103394, Neighbor cell measurements triggering before RLF" *3GPP TSG-RAN WG2 Meeting #113 bis electronic,* 20 April 2021 (2021-04-20), entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 July 2024** | **15 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/088601**

| Patent document cited in search report | | | Publication date (day/month/year) | Patent family member(s) | | | Publication date (day/month/year) |
|---|---|---|---|---|---|---|---|
| CN | 113543237 | A | 22 October 2021 | WO | 2021208859 | A1 | 21 October 2021 |
| CN | 113973346 | A | 25 January 2022 | WO | 2022017483 | A1 | 27 January 2022 |
| WO | 2022083514 | A1 | 28 April 2022 | CN | 114390571 | A | 22 April 2022 |

Form PCT/ISA/210 (patent family annex) (July 2022)

**EP 4 668 860 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310557886